(19) Europäisches Patentamt

European Patent Office

Office européen des brevets

(11) Publication number: **0 140 696**
**B1**

(12) **EUROPEAN PATENT SPECIFICATION**

(45) Date of publication of patent specification: **25.01.89**

(21) Application number: **84307423.8**

(22) Date of filing: **29.10.84**

(51) Int. Cl.⁴: **G 11 B 20/12,** G 06 F 3/06

(54) **Data filing system.**

(30) Priority: **28.10.83 JP 203451/83**

(43) Date of publication of application:
**08.05.85 Bulletin 85/19**

(45) Publication of the grant of the patent:
**25.01.89 Bulletin 89/04**

(84) Designated Contracting States:
**DE GB**

(56) References cited:
**CH-A- 561 448**
**DE-A-3 047 506**
**DE-B-1 524 152**
**US-A-4 001 883**

(73) Proprietor: **SHARP KABUSHIKI KAISHA**
**22-22 Nagaike-cho Abeno-ku**
**Osaka 545 (JP)**

(72) Inventor: **Okamoto, Shinji**
**Ahbanraifu 712 237-2 Kujyo-cho**
**Yamatokoriyama-shi Nara-ken (JP)**

(74) Representative: **Wright, Peter David John et al**
**R.G.C. Jenkins & Co. 26 Caxton Street**
**London SW1H 0RJ (GB)**

Courier Press, Leamington Spa, England.

## Description

The present invention relates to a sequential access data storage system. The system of the invention is particularly applicable to a data storage system for a sequential access type floppy disk.

Many kinds of data recording media have become available for personal computers, from a Compact Magnetic Tape (CMT) for a tape recorder to a Mini-Floppy Disk (MFD). The MFD is not inexpensive, and operators of personal computers commonly use the CMT medium because it is cheap, compact, and highly reliable. However, the CMT is incapable of providing high speed data transfer and accordingly suffers the disadvantage of slow operation for program writing and loading.

DE—B—1524152 discloses a data retrieval system for retrieving data recorded along tracks on the surface of a magnetic disc. Each track has a home address portion for track identification, and a plurality of record portions, each preceeded by a respective start identifying signal. Each record portion has record identification and data portions. Location of a desired record portion is achieved using the track address and record identification. Retrieval of such a desired record portion involves reading of all of the records from the given track into a core matrix and the appropriate part of this matrix is addressed and the data stored into a main memory, the contents of the core matrix being then transferred back to the interrogated track on the disc. There is nothing in this document to suggest that the disc itself is provided at a given position with information indicative of the number of currently stored record portions, and there is no disclosure of a technique for storing new record portions onto the disc.

The operators guide for the IBM 3741, entitled Bedienungsanleitung IBM Datenstation 3741, IBM Form GA 12—2047—4 November 1976, IBM Deutschland GmbH, gives instructions for establishing data set labels which identify the positions and sizes of data sets to be stored in sectors on tracks of a data storage disc. For each data set, the operator enters record length, which is the required length for records of a data set, and then address data identifying the first and last sectors to be occupied by the data set. Again, there is no reference to the storage at a given position on the disc of data concerning the number of data sets or records currently stored.

Neither of the above prior art systems is a sequential access system.

An improved, sequential access type floppy disk system has been designed, and has been marketed in Japan as part of their MZ 1500 personal computer by Sharp Kabushiki Kaisha.

The present invention is concerned with an improved data storage system which is particularly applicable to a sequential access type floppy disk, and is intended in its preferred embodiment to maximise its storage capacity.

According to the present invention, there is provided a sequential access data storage system for storing data files in sequential order onto a storage medium, each file to be stored following the files already stored, characterised in that the data storage format on said storage medium comprises a single header in front of a plurality of said data files, the header including numerical data indicative of the number of said presently stored data files, and in that the system has means operable, when a new data file is to be stored, to read said header, and in response to the determination of said number automatically to condition the system for recording said new data file at a position on said storage medium following said plurality of stored files, the system also having means operable to increment by one the numerical data of the header in accordance with the newly recorded data file.

The present invention will become more fully understood from the detailed description given hereinbelow and the accompanying drawings which are given by way of illustration only, and thus are not limitative of the present invention and wherein:

Fig. 1 shows a format of a data storage medium for a data storage system according to the present invention;

Figs. 2, 3 and 4 show examples of data storage using the data format of the medium of Fig. 1;

Fig. 5 shows a data format of a file number area for the medium of Fig. 1;

Fig. 6 shows a data format of a program file for the medium of Fig. 1;

Fig. 7 shows a block diagram of an interface circuit of a sequential access type floppy disk for use in the present invention; and

Figs. 8, 9(1), 9(2), 9(3), and 10 show flow charts of the various operations of the data storage system according to the present invention.

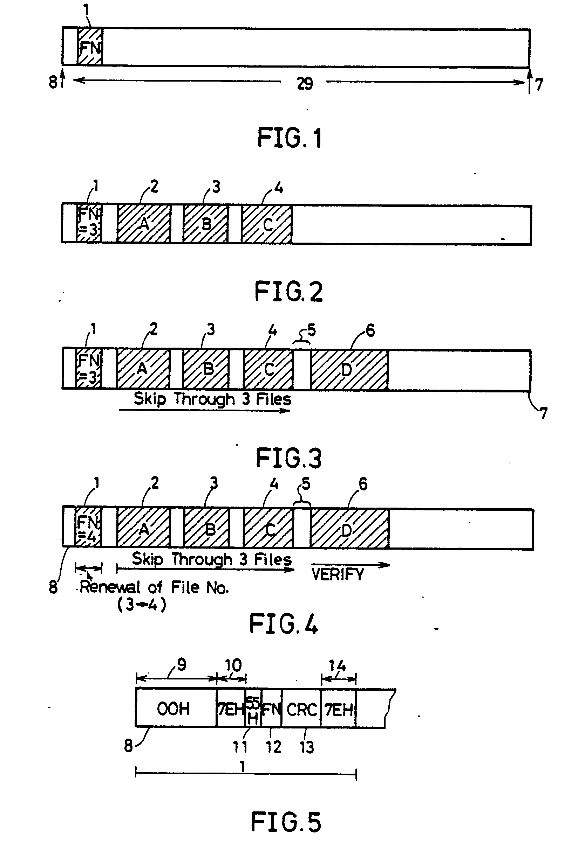

Fig. 1 shows a data format of a storage medium as used in accordance with the present invention.

First, the principle of storing data in accordance with the present invention will be explained.

Instead of separating a medium into a plurality of data storage blocks each having a predetermined standard size, each file is treated as having an optional length in accordance with the amount of data in the file. Such a data filing system is advantageous in that file gaps between blocks can be minimized, so that the data storage capacity of the medium can be maximised. The gist of the present data filing system is to position a single file called herein a file number area or a file header area in front of all of the data storage files on the medium. The file number area or the file header area is provided for storing the numerical data indicative of the number of data files presently stored in the medium. The data storing is controlled according to the number stored in the file number area.

Therefore, prior to using a new data storage medium, a figure "0" must be registered into the data file number area. This is referred to as a data format operation for the medium. Fig. 1 shows a format for use in such a data format operation.

With reference to Fig. 1, there is provided a file number area 1 to which the figure "0" should be stored upon its data format formation. More generally a file number FN is stored in this area. The data storage medium has a plurality of storage areas 29 between a medium top 8 and a medium end 7. After preparing the data storage format, each time a single file is stored in the medium, the contents of the file number area 1 are increased by 1. When a new file is to be stored, the position for storing the file in the medium is determined according to the file number stored in the file number area 1, so that a new file is stored just following the most recently-stored file. Selecting the file number enables a new file to be stored just following the file selected by the file number (in this case, all the files stored following the newly-stored file are made in vain).

The data storing system of the present embodiment will now be described more specifically.

Fig. 2 shows a condition in which three program files 2, 3 and 4 have been stored in the medium and the file number area 1 therefore stores "3" as the file number FN. To further store a fourth file "D", the contents "3" of the file number area 1 are first read-out. Then, the three files 2, 3 and 4 referred to respectively as "A", "B", and "C" in Fig. 2, are skipped through. When the file end flag stored at the end portion of the third file 4 is detected a file gap of a predetermined length for separating the two files is written-in. The file gap is an area in the data storage which is used mainly to indicate the end of the third file 4 and the beginning of the fourth file 6. Following this file gap 5, the fourth file 6 referred to as "D" is stored. At this time, the contents of the file number area 1 remains "3". While the fourth file 6 is being written, if the data length of this file 6 does not reach the medium end 7, it means that this file 6 can be stored in the medium. Next, the file number in the file number area 1 is incremented.

Because of the structure of the sequential access type floppy disk, when a data storage head or readout operation is performed the head continues to rotate relative to the disc until it is positioned at the medium end 7. Therefore, all the operations start at the position of the medium top 8. Referring to the above-described specific example, after the file 6 has been stored, the head is rotated relative to the medium until it reaches the medium end 7 and then returns to the medium top 8. During this operation, the previous file number is incremented by "+1", so that a new file number "4" is registered. After the file number is renewed, the head is re-advanced to the medium end 7 at which time the file registration ends. By using this period, the newly stored file 6 can be verified as shown in Fig. 4.

Thus, a new file is stored immediately following the preceding file. If the medium end 7 is reached during the file registration, it is determined that there is not enough space remaining on the medium for storing the file, and the registration of the file is cancelled. In such a case, the file number is not renewed.

The stored files can be accessed or loaded as described below.

To access the files, the file name is selected so that a file which is stored at any location on the medium can be accessed. Based on the contents of the file number area 1 and the contents of information blocks provided at the beginnings of the respective files it is detected whether the selected file name is stored on the medium. The files are skipped through until correspondence between the file name of an information block and the selected file name is detected. When the count of the skipped files equals the file number as represented by the contents of the file number area 1, it is determined that the selected file to be read-out is absent in this medium.

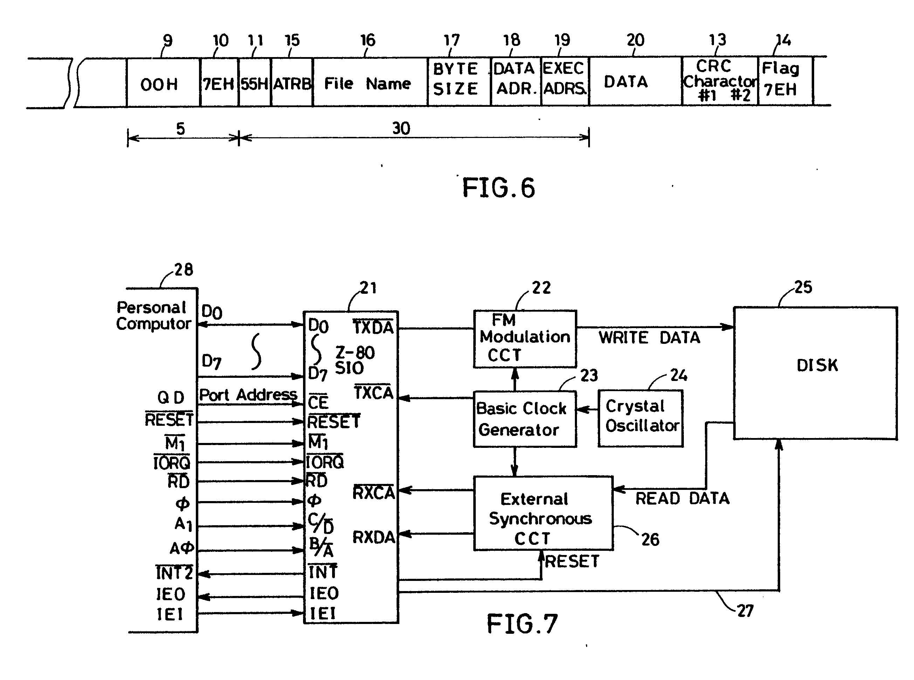

Fig. 5 shows a data format of the file number area 1. Fig. 6 shows a data format of the program file.

These formats are examples when an interface of Z-80 Serial Input/Output (SIO), produced by Sharp Corporation, Japan, is used between a Central Processing Unit (CPU) and the floppy disk and a Synchronous Data Link Control Protcol mode is employed to receive/transmit the data.

With reference to Fig. 5, a first area 9 is provided for storing the SIO external circuit bit synchronous data for a predetermined time, e.g. "00H" data. A second area 10 is provided for storing SIO synchronous characters for a predetermined time, e.g., "7EH". A third area 11 is provided for storing SIO station address for a predetermined time, e.g., "55H". A fourth area 12 is provided for storing the file number or the number of presently storing the files, e.g., "0" to "FFH". A fifth area 13 is provided for storing a CRC character data of 2 bytes. A sixth area 14 is provided for storing the end flag for a predetermined time, e.g., "7EH".

In Fig. 6, an information block 30 storing the file name comprises an area 15 of 1 byte storing the type of program file, an area 16 storing the file name, an area 17 of 2 byte storing the byte size of the file data, an area 18 storing the top address of the data, and an area 19 storing execution address for this file, all as the control data. The storage data 20 is contained in a further area 20. The control data such as the file name and the bit size are counted as a single file and the storage data are counted as another file.

Fig. 7 shows a block diagram of the interface circuit.

The circuit of Fig. 7 comprises a Z-80 SIO circuit 21, an FM modulation circuit 22, a basic clock generator 23, a crystal oscillator 24, a sequential access type floppy disk 25, an external synchronous circuit 26, and a personal computer 28. A control signal 27 is generated by the Z-80 SIC circuit 21 to switch on the motor and make it ready.

The data are transmitted to the sequential access type floppy disk 25 with the FM modulation. The bits of the data read-out from this disk 25 are made synchronous by the external synchronous circuit 26 to be forwarded into the Z-80 SIC circuit 21. The basic clock generator 23 is provided for providing basic clocks determining data transference speed. The reset signal for the external synchronous circuit 26 is generated by a CPU, so that the bit of the file gap is made synchronous.

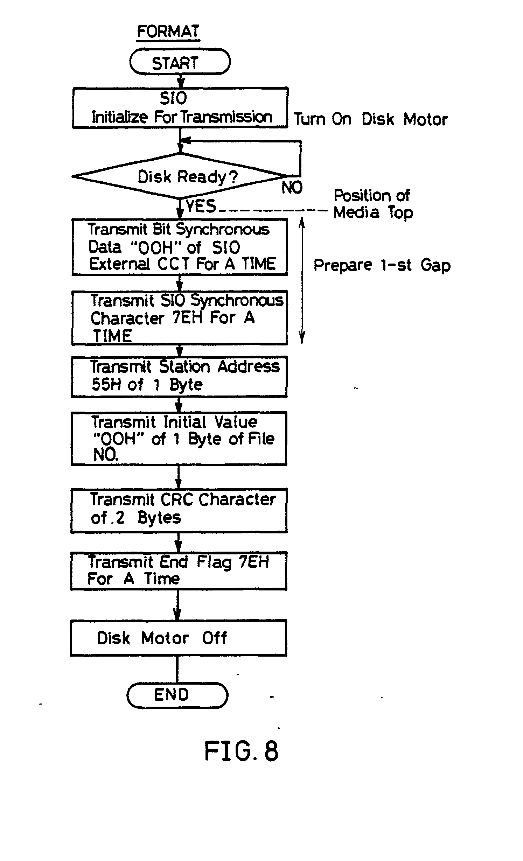

Figs. 8 through 10 show flow charts of the various operations of the data storage system of the present invention.

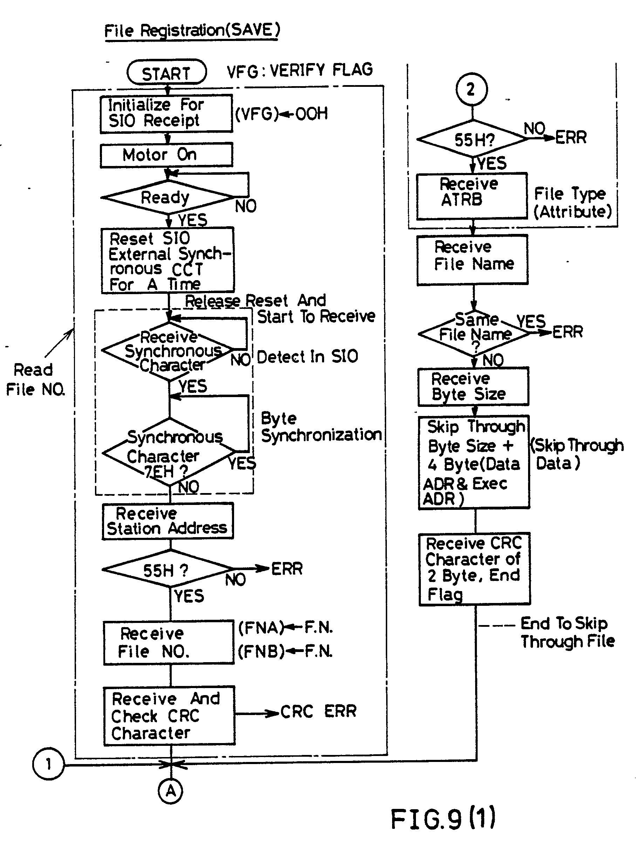

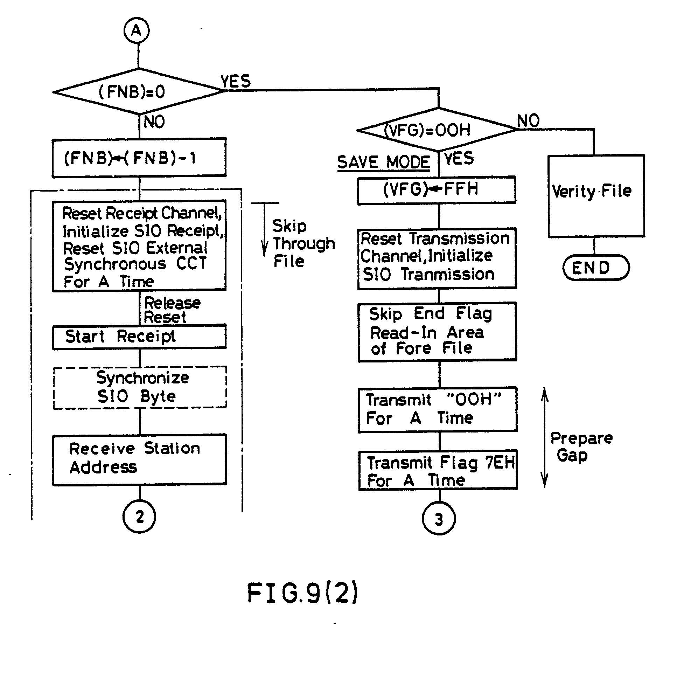

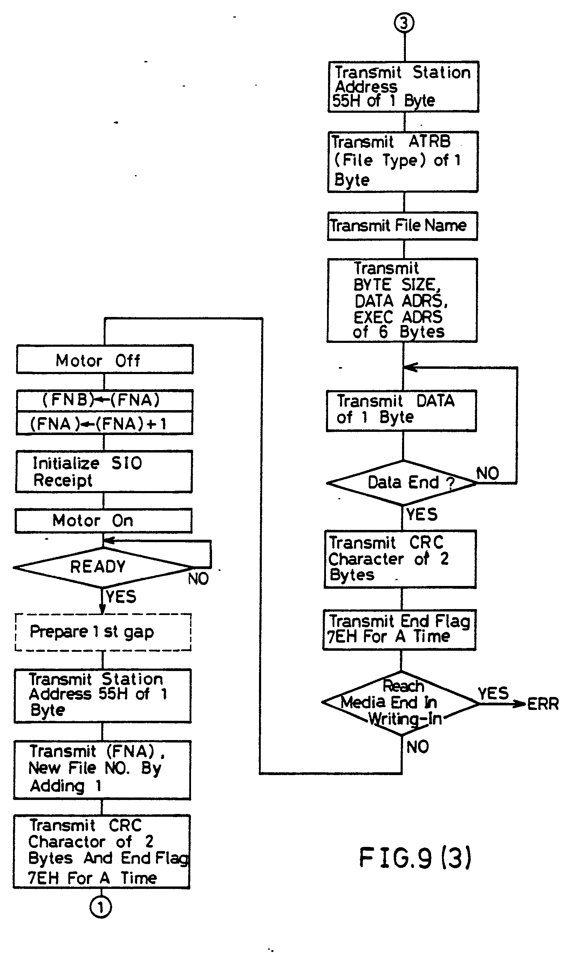

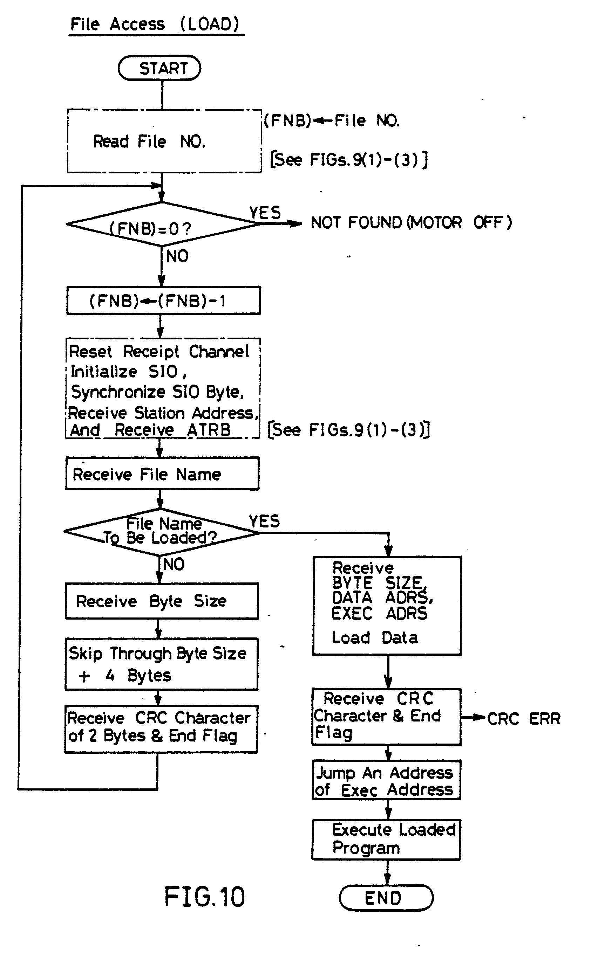

Fig. 8 is a flow chart of the data format operation as described with reference to Fig. 1. Figs. 9(1) through 9(3) are flow charts of registering or saving the files. Fig. 10 is a flow chart of accessing or loading the files.

As described above, in accordance with the present invention, the storage capacity of the data storage medium can be utilized in its maximum. It becomes possible to register (save) a plurality of files and access (load) some optional files, advantageously.

## Claims

1. A sequential access data storage system for storing data files (A, B, C) in sequential order onto a storage medium (29), each file to be stored following the files already stored, characterised in that the data storage format on said storage medium comprises a single header (FN) in front of a plurality of said data files (A, B, C), the header including numerical data indicative of the number of said presently stored data files, and in that the system has means operable, when a new data file (D) is to be stored, to read said header (FN), and in response to the determination of said number automatically to condition the system for recording said new data file (D) at a position on said storage medium following said plurality of stored files, the system also having means operable to increment by one the numerical data of the header (FN) in accordance with the newly recorded data file.

2. A system according to claim 1 characterised in that there are provided means operable to condition the system such that, by skipping through said presently stored data files (A, B, C), until the number of skipped files corresponds with said determined number, it reaches a blank portion of the storage medium following the last of said presently recorded data files.

3. A system according to claim 1 or claim 2 characterised in that it has means operable, after recording a new file (D) thereon, to perform a post-storage operation comprising advancing to the end (7) of the storage medium and then returning to the beginning (8) of the storage medium, said incrementing of the numerical data being carried out during said post-storage operation.

4. A system according to any preceding claim, characterised in that it has means operable to provide a predetermined gap (5) on the storage medium in front of each respective data file (A, B, C, D).

5. A system according to any preceding claim, wherein there is provided a frequency modulation circuit (22) for transmitting a frequency modulated data writing signal to the storage medium, an external synchronous circuit (26) for transmitting data bits read from the storage medium, and a basic clock generator (23) for generating a clock signal for determining the speed of data transmission by said frequency modulation and external synchronous circuits.

6. A system according to any preceding claim, which is operable to store data files of variable length.

7. A system according to any preceding claim, wherein at the beginning of each said data file stored on said storage medium is an information block (30) which includes an area (16) storing file identification data for that file, and wherein the system has means operable to search for a required data file by examining the file identification data in said areas (16) of the information blocks (30) of successive data files for correspondence with the file identification data of said required data file, and by skipping through those data files for which correspondence is not detected, and wherein a count of the data files skipped through during the search is compared with said determined number and absence of the required data file from the storage medium is determined when said count reaches said determined number.

## Patentansprüche

1. Datenspeichersystem mit sequentiellem Zugriff zur Speicherung von Dateien (A, B, C) in sequentieller Folge auf einen Datenträger (29), wobei jede zu speichernde Datei einer bereits gespeicherten Datei folgt, dadurch gekennzeichnet, daß das Datenspeicherungsformat auf dem Datenträger vor den Dateien (A, B, C) einen Einzelvorspann (FN) aufweist, der numerische Daten über die Anzahl der gespeicherten Dateien (A, B, C) enthält, daß das Dateinspeichersystem eine Einrichtung aufweist, die den Inhalt des Einzelvorspanns (FN) ausliest, wenn eine neue Datei (D) gespeichert werden soll, und die als Antwort auf die ermittelte Anzahl das Datenspeichersystem automatisch dazu veranlaßt, die neue Datei (D) an einer Stelle auf dem Datenträger aufzuzeichnen, die sich an die bereits gespeicherten Dateien anschließt, un daß das Datenspeichersystem desweiteren eine Einrichtung aufweist, die die numerischen Daten über die Anzahl der gespeicherten Dateien (A, B, C) im Einzelvorspann (FN) gemäß der neu aufgezeichneten Datei um Eins erhöht.

2. Datenspeichersystem nach Anspruch 1, dadurch gekennzeichnet, daß eine Einrichtung vorhanden ist, die das Datenspeichersystem derart konditioniert, daß es durch Überspringen der gespeicherten Dateien (A, B, C), bis die Anzahl der übersprungenen Dateien mit der ermittelten Anzahl übereinstimmt, eine Leerstelle auf dem Datenträger erreicht wird, die sich an der letzten gespeicherten Datei anschließt.

3. Datenspeichersystem nach Anspruch 1 oder 2, dadurch gekennzeichnet, daß es eine Einrichtung aufweist, die, nach der Aufzeichnung der neuen Datei (D), eine Nachspeicherungsoperation durchführt, die einen Vorlauf zum Ende (7) und einen Rücklauf zum Anfang (8) des Datenträgers umfaßt, und daß die Erhöhung der numerischen Daten über die Anzahl der gespeicherten Dateien (A, B, C) während dieser Nachspeicherungsoperation ausgeführt wird.

4. Datenspeichersystem nach einem der vorstehenden Ansprüche, dadurch gekennzeichnet, daß es eine Einrichtung aufweist, die auf dem Datenträger vor jeder Datei (A, B, C, D) jeweils eine bestimmte Lücke (5) schafft.

5. Datenspeichersystem nach einem der vorstehenden Ansprüche, gekennzeichnet durch eine Frequenzmodulationsschaltung (22) zur Übertragung eines frequenzmodulierten Daten-Schreibsignals zum Datenträger, eine externe Synchronisierungsschaltung (26) zur Übertragung der vom Datenträger ausgelesenen Datenbits und durch einen Basistaktgeber (23) zur Erzeugung eines Taktsignals, das die Datenübertragungsgeschwindigkeit der Frequenzmodulations- und der externen Synchronisierungsschaltung bestimmt.

6. Datenspeichersystem nach einem der vorstehenden Ansprüche, dadurch gekennzeichnet, daß es Dateien variabler Länge speichern kann.

7. Datenspeichersystem nach einem der vorstehenden Ansprüche, dadurch gekennzeichnet, daß am Anfang einer jeden auf dem Datenträger gespeicherten Datei ein Informationsblock (30) vorhanden ist, der einen Bereich (16) enthält, in dem Identifizierungsdaten der zugeordneten Datei gespeichert sind, daß das System eine Einrichtung aufweist, die die benötigte Datei sucht, indem sie die in den Bereichen (16) der Informationsblöcke (30) enthaltenen Identifizierungsdaten einander folgender Dateien auf Übereinstimmung mit den Identifizierungsdaten der benötigten Datei prüft und die Dateien mit den nicht übereinstimmenden Identifizierungsdaten überspringt, und daß die Anzahl der beim Suchvorgang übersprungenen Dateien mit der ermittelten Anzahl der Dateien verglichen und das Nichtvorhandensein der benötigten Datei festgestellt wird, wenn die Anzahl der übersprungenen Dateien gleich der ermittelten Anzahl ist.

## Revendications

1. Système de mémorisation de données à accès séquentiel pour la mémorisation, dans un ordre séquentiel, de fichiers de données (A, B, C) sur un support d'enregistrement (29), chaque fichier devant être mémorisé étant disposé à la suite des fichiers déjà mémorisés, caractérisé en ce que le format de mémorisation des données sur ledit support d'enregistrement inclut une seule en-tête (FN) située en avant d'une pluralité desdits fichiers de données (A, B, C), l'en-tête incluant une donnée numérique indicative du nombre desdits fichiers de données alors mémorisés, et en ce que le système comporte des moyens pouvant agir, lorsqu'un nouveau fichier de données (D) doit être mémorisé, pour lire ladite en-tête (FN) et, en réponse à la détermination dudit nombre, conditionner automatiquement le système pour l'enregistrement dudit nouveau fichier de données (D) dans une position située sur ledit support d'enregistrement à la suite de ladite pluralité de fichiers mémorisés, le système comportant également des moyens pouvant agir pour incrémenter de un la donnée numérique de l'en-tête (FN) conformément au fichier de données nouvellement enregistré.

2. Système selon la revendication 1, caractérisé en ce qu'il est prévu des moyens pouvant agir pour conditionner le système de manière que, grâce à un saut portant sur lesdites fichiers de données (A, B, C) alors mémorisés, jusqu'à ce que le nombre de fichiers sautés corresponde audit nombre déterminé, le système atteigne une partie vide du support d'enregistrement, qui suit le dernier desdits fichiers de données alors enregistrés.

3. Système selon la revendication 1 ou 2, caractérisé en ce qu'il comporte des moyens pouvant agir, après l'enregistrement d'un nouveau fichier (D) dans ce système, pour réaliser une opération de post-mèmorisation incluant une avance jusqu'à l'extrémité (7) du support d'enregistrement, puis le retour au début (8) du support d'enregistrement, ladite incrémentation de la donnée numérique étant exécutée pendant ladite opération de post-mémorisation.

4. Système selon l'une quelconque des revendications précédentes, caractérisé en ce qu'il comporte des moyens pouvant agir pour établir un intervalle vide prédéterminé (5) sur le support d'enregistrement en avant de chaque fichier de données respectif (A, B, C, D).

5. Système selon l'une quelconque des revendications précédentes, dans lequel il est prévu un circuit de modulation de fréquence (22) servant à transmettre un signal d'enregistrement de données modulé en fréquence au support d'enregistrement, un circuit synchrone externe (26) servant à transmettre des bits de données lus à partir du support d'enregistrement et un générateur (23) d'un signal d'horloge de base, servant à produire un signal d'horloge destiné à déterminer la vitesse de la transmission de données par ledit circuit de modulation de fréquence et ledit circuit synchrone externe.

6. Système selon l'une quelconque des revendications précédentes, qui peut agir de manière à mémoriser des fichiers de données de longueurs variables.

7. Système selon l'une quelconque des revendications précédentes, dans lequel au début de chacun desdits fichiers de données, mémorisés sur ledit support d'enregistrement, se trouve disposé un bloc d'informations (30) qui inclut une zone (16) mémorisant des données d'identification pour ce fichier, et dans lequel le système comporte des moyens pouvant agir pour rechercher un fichier de données requis par l'examen des données d'identification de fichiers situées dans lesdites zones (16) des blocs d'informations (30) de fichiers de données successifs pour voir s'il existe une correspondance entre ces données et les données d'identification dudit fichier de données requis, et au moyen d'un saut des fichiers de données pour lesquels une correspondance n'est pas détectée, et dans lequel un compte des fichiers de données sautés au cours de la recherche est comparé audit nombre déterminé et une absence du fichier de données requis sur le support de mémorisation est déterminée lorsque ledit compte atteint ledit nombre déterminé.

FIG.1

FIG.2

FIG.3

Skip Through 3 Files

Renewal of File No.
(3→4)

VERIFY

FIG.4

FIG.5

FIG.6

| OOH | 7EH | 55H | ATRB | File Name | BYTE SIZE | DATA ADR. | EXEC ADRS. | DATA | CRC Character #1 | #2 | Flag 7EH |

9 10 11 15 16 17 18 19 20 13 14

30

5

FIG.7

Personal Computor 28

Z-80 SIO 21

D0 ～ D7

D0 — D7

Port Address — CE

Q D — RESET

RESET — RESET

M1 — M1

IORQ — IORQ

RD — RD

Φ — Φ

A1 — C/D

AΦ — B/A

INT2 — INT

IEO — IEO

IEI — IEI

TXDA

TXCA

RXCA

RXDA

FM Modulation CCT 22

Basic Clock Generator 23

Crystal Oscillator 24

External Synchronous CCT 26

DISK 25

WRITE DATA

READ DATA

RESET

27

FORMAT

```
        ( START )
            │
  ┌─────────────────────────┐
  │         SIO             │  Turn On Disk Motor
  │ Initialize For Transmission │
  └─────────────────────────┘
            │
            ├──────────────┐
            ▼              │
      ╱───────────╲        │
     ╱  Disk Ready? ╲──────┘
      ╲───────────╱   NO
            │ YES─ ─ ─ ─ ─ ─ ─ ─ ─  Position of
            │                        Media Top
  ┌─────────────────────────┐   ↑
  │ Transmit Bit Synchronous │   │
  │ Data "OOH" of SIO        │   │  Prepare 1-st Gap
  │ External CCT For A TIME   │   │
  └─────────────────────────┘   │
            │                    │
  ┌─────────────────────────┐   │
  │ Transmit SIO Synchronous │   │
  │ Character 7EH For A      │   │
  │ TIME                     │   ↓
  └─────────────────────────┘
            │
  ┌─────────────────────────┐
  │ Transmit Station Address │
  │ 55H of 1 Byte            │
  └─────────────────────────┘
            │
  ┌─────────────────────────┐
  │ Transmit Initial Value   │
  │ "OOH" of 1 Byte of File  │
  │ NO.                      │
  └─────────────────────────┘
            │
  ┌─────────────────────────┐
  │ Transmit CRC Character   │
  │ of 2 Bytes               │
  └─────────────────────────┘
            │
  ┌─────────────────────────┐
  │ Transmit End Flag 7EH    │
  │ For A Time               │
  └─────────────────────────┘
            │
  ┌─────────────────────────┐
  │ Disk Motor Off           │
  └─────────────────────────┘
            │
        ( END )
```

FIG. 8

File Registration(SAVE)

START   VFG : VERIFY FLAG

Initialize For SIO Receipt   (VFG)←OOH

Motor On

Ready   NO

YES

Reset SIO External Synch-ronous CCT For A Time

Release Reset And Start To Receive

Receive Synchronous Character   NO   Detect In SIO

YES

Byte Synchronization

Synchronous Character 7EH ?   YES

NO

Receive Station Address

55H ?   NO   →ERR

YES

Receive File NO.   (FNA)←F.N.   (FNB)←F.N.

Receive And Check CRC Character   →CRC ERR

1

A

Read File NO.

2

55H?   NO   →ERR

YES

Receive ATRB   File Type (Attribute)

Receive File Name

Same File Name ?   YES   →ERR

NO

Receive Byte Size

Skip Through Byte Size + 4 Byte(Data ADR & Exec ADR )   (Skip Through Data )

Receive CRC Character of 2 Byte, End Flag

——— End To Skip Through File

FIG.9 (1)

4

EP 0 140 696 B1

FIG.9(2)

③

Transmit Station
Address
55H of 1 Byte

Transmit ATRB
(File Type) of 1
Byte

Transmit File Name

Transmit
BYTE SIZE,
DATA ADRS,
EXEC ADRS
of 6 Bytes

Transmit DATA
of 1 Byte

Data End ? — NO

YES

Transmit CRC
Character of 2
Bytes

Transmit End Flag
7EH For A Time

Reach
Media End In
Writing-In — YES → ERR

NO

Motor Off

(FNB)←(FNA)
(FNA)←(FNA)+1

Initialize SIO
Receipt

Motor On

READY — NO

YES

Prepare 1 st gap

Transmit Station
Address 55H of 1
Byte

Transmit (FNA),
New File NO. By
Adding 1

Transmit CRC
Charactor of 2
Bytes And End Flag
7EH For A Time

①

FIG.9 (3)

File Access (LOAD)

FIG.10